# EUROPEAN PATENT APPLICATION

(11) **EP 4 659 557 A1**
(43) Date of publication of application: **10.12.2025**
(21) Application number: 25181074.3
(22) Date of filing: 05.06.2025
(51) Int. Cl.: A01C 7/08, A01C 7/12, A01C 19/00, A01C 19/02

(54) **ALTERNATIVE DRIVES FOR THE DOSING SYSTEM OF A PNEUMATIC AGRICULTURAL APPLICATION MACHINE WITH SECTIONAL CONTROL, E.G. SEEDERS AND FERTILISER SPREADERS**

(30) Priority: 05.06.2024 US 202463656180 P; 19.05.2025 US 202519211815
(71) Applicant: Mario Tanzi S.A., S2183XAB Arequito Santa Fe (AR)
(72) Inventor: TANZI, Ignacio, S2183XAB AREQUITO (AR)
(74) Representative: EP&C

(57) **Abstract**

An alternative drive dosing system (1) for agricultural machines, e.g. pneumatic seeders and fertilizer spreaders with sectional operation, comprising: a) a hopper having internal divisions; b) an air flow distribution system; and c) input dosing feeders (9) suitable to be operated by two different drive systems; the dosing system alternatively comprising: (i) a main drive shaft (2) linked via wrap clutches (6) to perpendicular secondary shafts (5) of a plurality of feeders (9) with roller sections (4), the wrap clutches being controlled by solenoids (7) to allow or stop the flow of input, and wherein one end of the main drive shaft is linked to an electric power generator; or ii) electric motors (8) to replace the system of wrap clutches in each roller section, wherein such motors are capable of allowing or stopping the flow of inputs by activating or deactivating the respective roller section.

## Description

### SPECIFICATION

### Technical Field of the Invention

The present invention refers in general to an agricultural input dosing system usable in agricultural machines by pneumatic drive system, commonly called air drill system, for example, seeders and fertilizer spreaders, and in particular to a dual system, i.e. system of double drive possibility of the feeders allowing sectional cutting for the dosing of agricultural inputs (products used in agriculture to help plants and crops to grow and develop. They include products such as fertilizers, seeds, insecticides, etc.), or ejection or retention of any product from an agricultural machine, such as an air seeder or fertilizer spreader. By means of a dual functionality system, the independent feeders can be driven, by means of a first option, which uses a main shaft extending to a system of clutches, coupled to the individual shafts of each feeder and this main shaft to an electrohydraulic motor or an electric motor, or a gearbox or other drive system. The drive of the clutch system allows the feeders to rotate or stop, thus being able to operate an agricultural machine, e.g. a seeder or a fertilizer spreader with sectional drives to avoid overlapping in the spreading task (seeding or fertilizing or other).

In a second option, the independent feeders can be driven by electric motors, with one motor per feeder. The system thus controls the drive of the motors, allowing them to rotate or stop to operate the agricultural machine, such as a seeder or fertilizer spreader or other, sectional drives.

The system, then, is an alternative drive and you can choose which of the two drive alternatives to use.

### State of Art and Problems to be Solved

The feeders are used in agricultural machinery, such as air seeding machines to measure and dose inputs, which can be for sowing, fertilization or any other useful agricultural input.

This type of feeder often has a toothed roller section that is located inside a housing where the input is received from a hopper that is generally located at the top and may contain one or more internal dividers with lids at the top for filling. The input is transported by means of an air stream and controlled according to the rotational speed of the roller section that receives the input, for example, the sowing seed or fertilizer or other through some grooves to be directed, propelled by an air stream that flows to multiple distribution hoses that are distributed along the entire agricultural machine, for example, a seeder or a fertilizer spreader, producing the controlled fall of agricultural inputs to the soil delimited by each of the furrows.

However, although this system is optimal for the equitable distribution across the width of the machine, for example, a seeder, the reality is that it is not distributed uniformly since the land does not have exact and perpendicular dimensions, but rather the vast majority extends its perimeter in different shapes, curves and/or irregular polygons. This means that the same machine, for example, a seeder, due to the extensive sizes that cover the width, must perform several maneuvers to cover the entire surface, with the consequence of producing a double sowing (or whatever corresponds) -if not more- on the same soil, incurring the producer in seed expenses and damages on the soil in the exploitation of nutrients. This often occurs in various situations, for example, when trying to sow at the edge of a field where the area to be sown is less wide than the seeder, when there are obstacles to avoid in the field, or when there are smaller spaces that should not be sown.

In some cases, a dosing system has been developed with sections that are mounted on a main shaft and operated by gates that open and close the product inlet to the roller section as seen in US patent application US 2009 0079624 A1, which can be accomplished by a clutch mechanism that is actuated to engage/disengage the product metering impeller. US 2009 0079624 A1 describes a sectional meter closing apparatus for agricultural implements that prevents double seeding or fertilization by controlling the flow of material to specific members that engage with the soil. The system includes individually controlled gates that can be operated manually or automatically by GPS. While both systems allow automatic control by GPS, the present invention also offers the option of manual control by means of wrap clutches.

The US '624 application focuses on avoiding double seeding or fertilization, while the proposed invention focuses on precise dosing of agricultural inputs.

The use of clutch mechanisms can be seen in US patent US 5,078,066 A which focuses on creating hatching lines by selectively disconnecting seed meters. It does this by means of a spring-wrapped clutch. This can be a specific advantage in the creation of hatching lines, which can be a valuable functionality for certain users. However, the device of the present invention is a more versatile, easier to maintain and potentially more efficient system, allowing a choice between wrap clutches and independent electric motors, in addition to its modular design reducing downtime in an eventual replacement of components.

US Patent US 7,571,688 B1, on the other hand, describes a seeding machine that uses clutches integrated within gearboxes to control the operation of individual seed meters, allowing precise seed placement. This system may not offer the same level of accuracy and speed in controlling input flow.

Another of the advances currently being developed is the possibility of a dosing system with independent sections in which each section works with an independent motor, individualizing the opening and closing operation of each of the outlets which, depending on the switching on or off of the particular motor, the flow -or not- of the air current drives the agricultural input into the soil sown or to be sown.

This second system is presented to solve one of the problems caused by the first proposed system: when closing and opening the guillotine in a sector prior to the roller section, the latter is affected by a progressive emptying and filling respectively and, as a consequence, a double seeding is obtained at first, and a sustained vacuum is obtained when rehabilitating the fall duct.

However, although in one aspect the individual motor system is superior to the guillotine dosing system, it is not completely satisfactory for producers due to its high production and maintenance costs, making it inaccessible to a large number of medium and small producers.

Another attempt to maintain the guillotine system as movable gates is the Mexican patent application MX 2010 006140 A (equivalent to the European patent with Spanish publication ES 2,415,933 T3) that places the system downstream from the roller section, but without allowing the product to enter the distribution system avoiding the delay in stopping the product flow. This design allows the product flow to be stopped quickly without the feeder having to empty first. It also avoids mixing of the dosed product with the air stream or with additional products.

### Object of the Invention

For the above mentioned, the present invention tries to solve a main problem: to overcome the double deposition of agricultural inputs, repeated on the same lines of land, saving inputs to reduce costs and avoid the impoverishment of the productivity of the land.

From the approaches made to this main problem, there are two problems that arise from the current state of the technology: on the one hand, the emptying time that nullifies the ideal operation and the dead time of filling that leaves strips without product, and on the other hand, the high investment cost for a sector of producers.

For all these reasons, these are two objects that have been analyzed to innovate in the current technique of dosing agricultural inputs, allowing in a single air-powered agricultural machine, for example, a seeder or a fertilizer spreader or other, to provide the producer with various dosing systems to execute at his own choice, convenience and preference.

By means of the present invention it is possible to avoid the delay produced between the flow of the input to the feeder, for example, seeds, and the effective closing of the guillotine that continues conserving seeds in the roller section, causing economic expenses at the same time that it demands more work to the soil due to the double -or greater- sowing on the same surface. For this reason, a system of clutches on each secondary axle or an electric motor on each secondary axle has been developed to replace them.

Another objective of this sectional dosing system is to optimize costs in both inputs and technology, thus expanding the producer's possibilities.

### Summary of the Invention

Therefore, the object of the present invention is an alternative transmission dosing system for agricultural machines, for example, pneumatically driven seeders and fertilizer spreaders with sectional cutting, comprising:
a) a hopper that has internal divisions;
b) an air flow distribution system; and
c) regulators for dosing an input, which are operated by two different systems, allowing the use of different distribution methods;
the dosing system comprising alternatively:
i) a main drive shaft linked to a plurality of feeders comprising roller sections with secondary shafts aligned parallel to each other and perpendicular to the main shaft for metering the input from the hopper to the ground, wherein the main shaft and the secondary shafts are linked by means of a wrap clutch system consisting of a clutch in each roller section, being able to allow or stop the input flow by means of its activation or deactivation by means of a solenoid, and wherein one of the ends of the main transmission shaft is linked to an electric power generator; o
ii) an electric motor in replacement of the wrap clutch system in each roller section, wherein said motor is capable of enabling or stopping the flow of inputs by activating or deactivating it.

Preferably, the alternative transmission dosing system, the power generator linked to the main transmission is a gearbox or electrohydraulic motor, or electric motor.

Preferably, each roller section has a knurled part that allows control of the amount of product entering the air system.

Also preferably, each roller section has a secondary shaft driven by a main shaft that may be driven by various types of motors, such as a gearbox or electrohydraulic motor, or electric motor or other type of main transmission, and each secondary shaft contains a wrap clutch system consisting of friction springs capable of individually engaging and disengaging each roller section of the tank.

Still preferably, each roller section has an independent electric motor capable of allowing or stopping the flow of input up to its outlet.

Preferably, the alternative transmission dosing system for agricultural machines, for example pneumatically driven seeders and fertilizer spreaders with sectional cutting, allows the producer to discern between the format chosen to use in the distribution of agricultural inputs, being able to do so in the established way where each roller section has a secondary shaft mobilized by a main shaft that can be driven by various types of motors, such as a gearbox or electrohydraulic motor, or electric motor or other type of main transmission, and each secondary shaft contains a wrap clutch system consisting of friction springs capable of individually engaging and disengaging each roller section of the tank or, alternatively, each roller section has an independent electric motor capable of activating and deactivating the flow of product to its outlet.

Also claimed is an agricultural machine, for example, a seeder or a pneumatically driven fertilizer spreader with sectional cutting, comprising an alternative transmission dosing system of the invention and the method for metering the distribution of agricultural inputs using said agricultural machine, for example, a seeder or a pneumatically driven fertilizer spreader with sectional cutting.

### Brief Description of the Figures

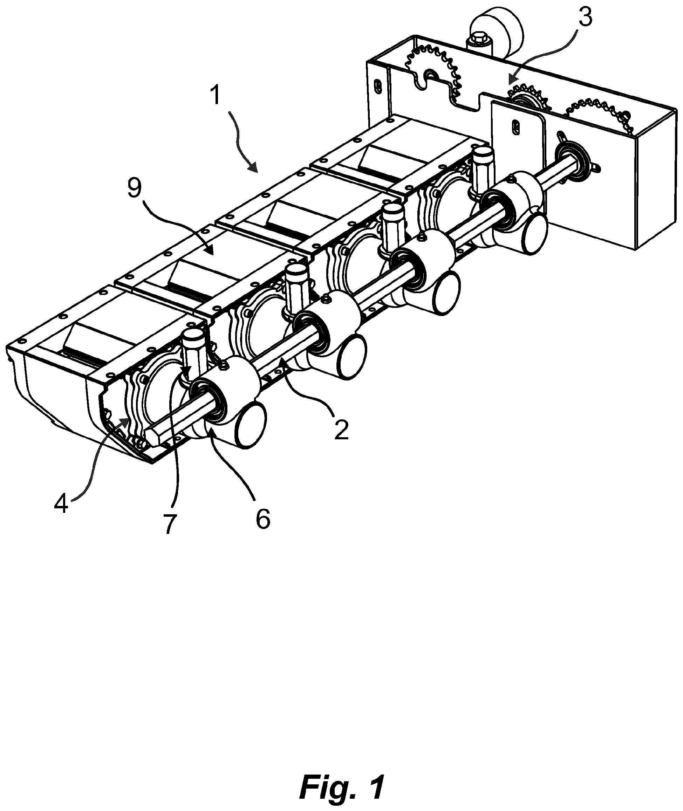

Figure 1 shows a perspective of a preferred embodiment of an alternative drive dosing system for agricultural machines, e.g., pneumatically driven seeder and fertilizer spreaders with sectional cutting by means of a main drive shaft with a wrap clutch system according to the present invention.

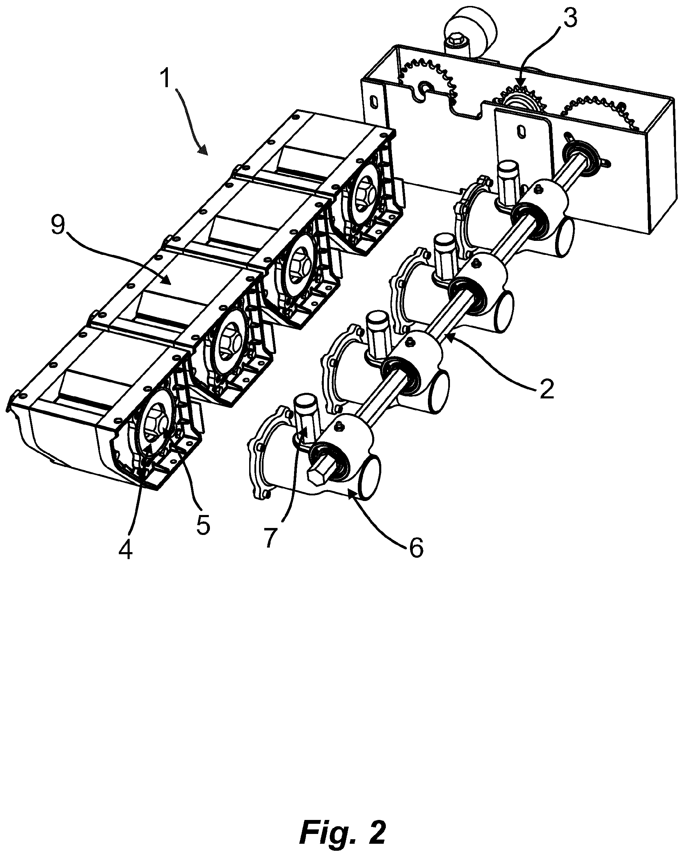

Figure 2 shows an exploded view of the alternative drive dosing system for agricultural machines, e.g., pneumatically driven seeders and fertilizer spreaders with sectional cutting of Figure 1.

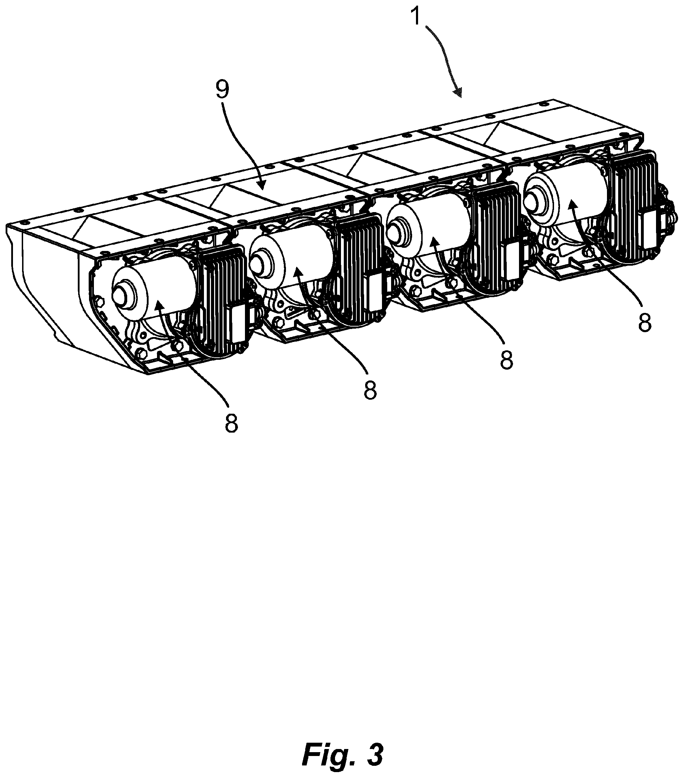

Figure 3 shows a perspective view of the alternative drive dosing system for agricultural machines, e.g., pneumatically driven seeders and fertilizer spreaders with sectional cutting of Figure 1, wherein the clutch system was switched to a plurality of electric motors connected to the secondary shafts of each feeder.

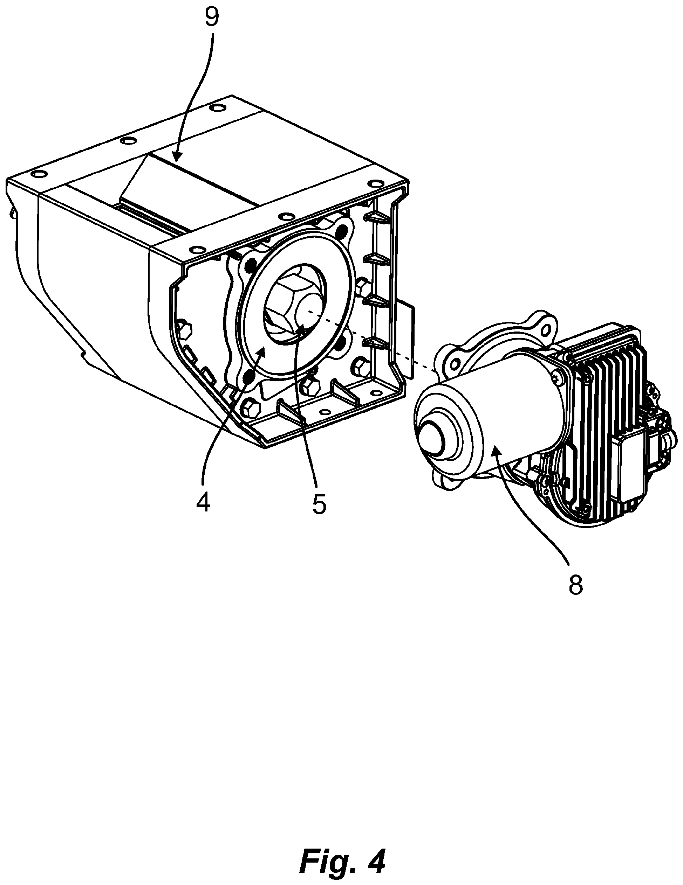

Figure 4 independently shows a metering assembly with its separate electric motor, for the alternative drive dosing system for agricultural machines, e.g., pneumatically driven seeders and fertilizer spreaders with sectional cutting of Figure 1.

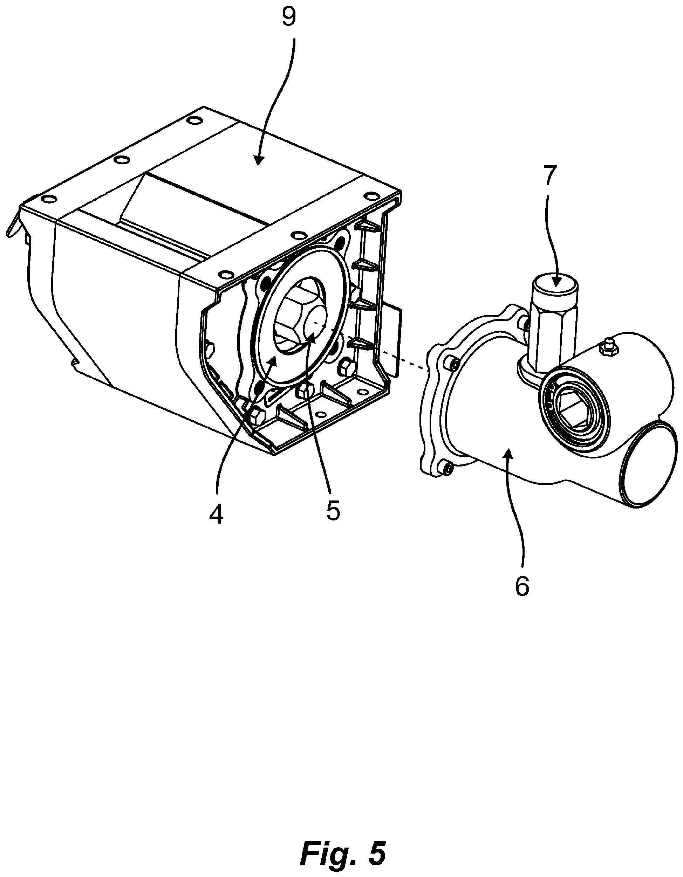

Figure 5 shows separately a metering assembly with its separate clutch, for the alternative drive dosing system for agricultural machines, e.g. pneumatically driven seeders and fertilizer spreaders with sectional cutting of Figure 1.

### Detailed Description of the Invention

The present invention is applicable to all air-dispensing agricultural machinery, whether the product comes from one, two or more supply hoppers, and provides an alternative transmission dosing system (1) for agricultural machines, for example, pneumatically driven seeders and fertilizer spreaders with sectional cutting, whereby the producer is offered a first choice of using a system of a main drive shaft (2) driven by means of a single electric or electrohydraulic motor, or by a gearbox (3), or by mechanical transmission, or by any other selected main drive method.

Starting from the main transmission shaft (2) from which the different sections of rollers (4) are linked by means of at least one secondary shaft (5) and which each have a clutch (6) of the wrap clutch type consisting of friction springs and capable of disengaging by means of a solenoid (7) to cut off the air flow transmission that drags the product.

As a second alternative option, the present invention provides the possibility of inserting in each roller section (4) an independent electric motor (8) in substitution of the rotation of a main drive shaft (2) driven by a single electric or electrohydraulic motor, or by a gearbox (3), or by mechanical transmission, or by any other selected main transmission method, to be replaced by the self-propulsion exerted on each roller section (4) by said electric motor (8), activating and deactivating the individual and immediate rotation of the secondary shafts (5).

Therefore, the object of the present invention is directed to an alternative transmission dosing system (1) for agricultural machines, for example, pneumatically driven seeders and fertilizer spreaders with sectional cutting, comprising:
a) a hopper that has internal divisions;
b) an air flow distribution system; and
c) regulators for dosing an agricultural input that is handled by two different systems, allowing the use of different distribution methods;
the dosing system (1) alternatively comprising:
i) a main transmission shaft (2) linked to a plurality of feeders (9) comprising roller sections (4) with secondary shafts (5) aligned parallel to each other and perpendicular to the main shaft (2) for metering the agricultural input from the tank to the ground, wherein the main shaft (2) and the secondary shafts (5) are linked by means of a wrap clutch system consisting of a clutch (6) on each roller section (4), being able to allow or stop the flow of inputs by means of its activation or deactivation by means of a solenoid (7), and wherein one of the ends of the main drive shaft (2) is linked to a gearbox (3) or electrohydraulic motor, or electric motor or other type of main transmission; o
ii) an electric motor (8) in replacement of the wrap clutch system (6) in each roller section (4), wherein said motor (6) is capable of allowing or stopping the flow of inputs by activating or deactivating it.

In particular, each roller section (4) of the alternative transmission dosing system (1) has a grooved part that allows the control of the quantity of product entering the air system.

Each roller section (4) of the alternative drive dosing system (1) has a secondary shaft (5) mobilized by the main drive shaft (2) which can be driven by various types of motors, such as a gearbox (3) or an electrohydraulic motor, or an electric motor or other type of main transmission, and each secondary shaft (5) contains a clutch system (6), of the wrap clutch type, consisting of friction springs capable of individually engaging and disengaging each roller section (4) of the hopper.

Alternatively, each roller section (4) of the dosing system (1) has an independent electric motor (8) capable of activating and deactivating the product flow to its outlet.

In this way, the alternative transmission dosing system (1) allows the producer to discern between different formats to use in the distribution of agricultural inputs, being able to do so by means of the secondary shafts (5) of the feeders (9) linked to a main transmission shaft (2) driven by a motor that can be of different type, such as a gearbox (3) or an electrohydraulic motor, or an electric motor or other type of main transmission, or alternatively interchangeably each roller section (4) is driven by an independent electric motor (6). In both cases, the input flow is activated or deactivated towards its exit to the ground.

The alternative transmission dosing system (1) of the present invention allows agricultural producers to have access to the same sectional cutting technique with a lower investment through the clutch system (6) and scalable to electric motors (8) without any modification, only replacing some components.

## Claims

1. An alternative drive dosing system for agricultural machines, e.g. pneumatically driven seeders and fertilizer spreaders with sectional cutting, comprising:
a) a hopper that has internal divisions;
b) an air flow distribution system; and
c) regulators for dosing an input, which are operated by two different systems, allowing the use of different distribution methods;
the dosing system comprising alternatively:
i) a main drive shaft linked to a plurality of feeders comprising roller sections with secondary shafts aligned parallel to each other and perpendicular to the main shaft for metering the input from the hopper to the ground, wherein the main shaft and the secondary shafts are linked by means of a system of wrap clutches consisting of a clutch in each roller section, being capable of allowing or stopping the flow of inputs by means of the activation or deactivation thereof by means of a solenoid, and wherein one end of the main drive shaft is linked to an electric power generator; or
ii) an electric motor to replace the system of wrap clutches in each roller section, wherein such motor is capable of allowing or stopping the flow of inputs by activating or deactivating it.

2. The alternative transmission dosing system according to claim 1, wherein the power generator linked to the main transmission is a gearbox or electrohydraulic motor, or electric motor.

3. The alternative transmission dosing system according to claim 1 or 2, wherein each roller section has a knurled part that allows control of the amount of product entering the air system.

4. The alternative drive dosing system according to any one of the preceding claims, wherein each roller section has a secondary shaft mobilized by a main shaft that is driven by various types of motors, such as a gearbox or electrohydraulic motor, or electric motor or other type of main drive, and each secondary shaft contains a wrap clutch type clutch system consisting of friction springs capable of individually engaging and disengaging each roller section of the tank.

5. The alternative drive dosing system according to any one of the preceding claims, wherein each roller section has an independent electric motor capable of allowing or stopping the flow of input to its outlet.

6. The alternative transmission dosing system of claim 1, which allows the producer to opt between the format chosen to use in the distribution of inputs, doing so in the manner set forth in claim 4 or claim 5.

7. An agricultural machine, for example, a seeder or a pneumatically driven fertilizer spreader with sectional cutting, comprising an alternatively driven dosing system according to any one of the preceding claims.

8. A method for metering the distribution of agricultural inputs using an agricultural machine, for example, a seeder or a pneumatically driven fertilizer spreader with sectional cutting, of claim 7.
